# FASCICULE DE BREVET EUROPEEN

(11) **EP 1 348 596 B1**
(45) Date de publication et mention de la délivrance du brevet: **11.10.2006**
(21) Numéro de dépôt: 03290495.5
(22) Date de dépôt: 03.03.2003
(51) Int. Cl.: B60R 1/06, B60J 5/04

(54) **Agencement d'éléments d'habillage de porte de véhicule automobile comportant un panneau intérieur et un tableau de commande ainsi qu'une trappe de démontage**
Kraftfahrzeugstürverkleidung mit einer Innenplatte und einer Schalttafel sowie einer Demontagesöffnung
Vehicle door cladding including an interior panel and control pad as well as an access opening for disassembly

(30) Priorité: 01.03.2002 FR 0202612
(43) Date de publication de la demande: 01.10.2003
(73) Titulaire: Renault s.a.s., 92100 Boulogne Billancourt (FR)
(72) Inventeur: Grisot, Sylvain, 78150 Le Chesnay (FR)

(56) Documents cités:
- EP-A- 1 043 182
- DE-A- 19 816 012
- DE-C- 19 622 308

## Description

La présente invention se rapporte à un agencement d'éléments d'habillage de porte de véhicule automobile comportant un panneau intérieur et un tableau de commande d'un accessoire du véhicule monté sur ledit panneau intérieur.

Elle concerne en particulier un agencement dont le panneau intérieur présente une face interne prévue pour être en regard d'un panneau extérieur de porte et présente une face externe prévue pour être en regard de l'habitacle dudit véhicule, le tableau de commande dudit accessoire du véhicule étant monté sur ledit panneau intérieur de façon amovible, par exemple pour démontage lors de la réparation dudit tableau de commande.

Il est connu de monter sur des portes de véhicule des platines de commande de lève vitre ou de réglage de rétroviseur du véhicule. Elles sont montées de façon amovible en les tirant hors de l'orifice prévu pour les recevoir dans le panneau intérieur. Ces platines de commande sont par exemple encliquetés par rapport audit panneau intérieur. Elles comportent typiquement un ou deux interrupteurs. Leur taille et leur masse ne posent pas de problème pour prévoir des organes d'encliquetage dont la force d'accrochage ne puisse pas être vaincue lorsque la porte est claquée violemment lors de sa fermeture.

Le document EP1348596, qui correspond au préambule de la revendication 1, décrit une trappe utilisée pour l'accès à des mécanismes, par exemple un mécanisme de commande de coulissement de vitre par des rails, montés dans un caisson de porte, par exemple sur un panneau intérieur.

L'un des buts de l'invention est de proposer un agencement d'éléments d'habillage de porte de véhicule automobile qui permette le montage d'un tableau de commande dont le volume et la masse n'est pas compatible avec les organes d'encliquetage traditionnels utilisés pour la fixation des platines décrites précédemment. La force d'accrochage des organes d'encliquetage des platines ne serait pas suffisante pour garantir qu'elle ne soit pas vaincue par l'inertie d'un tableau de commande lorsque la porte est claquée violemment lors de sa fermeture, ledit tableau de commande étant plus volumineux et plus lourd que lesdits platines. En particulier, il s'agit de permettre le montage et le démontage d'un tableau de commande d'un appareil de climatisation du véhicule, qui comporte par exemple six interrupteurs, un afficheur et un circuit électronique interne, voire des relais.

Un autre but de l'invention est de permettre le montage vertical du tableau de commande sur l'habillage de porte.

Un autre but de l'invention est de permettre le montage et le démontage aisé du tableau de commande pour sa réparation. Le démontage du tableau de commande doit pouvoir s'effectuer sans démonter le panneau intérieur d'habillage de la porte et sans détériorer le panneau intérieur. Un risque de détérioration existe quand le démontage nécessite d'utiliser un outil.

Un autre but de l'invention est de permettre le montage desdits tableaux de commande sans utiliser de vis, du fait du temps important qu'elles nécessitent lors de leur vissage ou leur dévissage. De plus, dans le cas d'un assemblage par vis, il faut prévoir un accessoire d'habillage pour cacher les vis, au détriment du coût et de la compacité du tableau de commande.

Dans ce but, l'invention propose un agencement d'éléments d'habillage intérieur de porte de véhicule automobile ayant les caractéristiques de la revendication 1.

Selon d'autres caractéristiques avantageuses des l'agencement selon l'invention:
- ledit tableau de commande est placé sur ledit panneau intérieur en position sensiblement verticale,
- le tableau de commande comporte un boîtier et, pour organe de fixation, ledit boîtier est muni de pattes d'encliquetage présentant une face d'appui prévue pour faire face, en saillie par rapport à la périphérie dudit boîtier, à la face interne du panneau intérieur et coopérer avec des organes de fixation en relation avec le panneau intérieur, le tableau de commande comportant des moyens d'appui sur la surface du panneau interne en regard de l'habitacle,
- la face d'appui de chaque patte d'encliquetage du boîtier est alors prévue pour s'appuyer directement sur la face interne du panneau intérieur,
- les organes de fixation en relation avec le panneau sont prévus sur une entretoise prévue pour être placée en périphérie dudit boîtier entre la face interne du panneau intérieur et la face d'appui des pattes d'encliquetage du boîtier,
- l'entretoise comporte des pattes d'encliquetage prévues pour coopérer avec les pattes d'encliquetage du boîtier,
- pour organe de fixation, le panneau intérieur comporte des pattes d'encliquetage saillantes par rapport au contour d'un orifice d'accueil d'un boîtier du tableau de commande et prévues pour coopérer avec une surface correspondante du boîtier située en regard du panneau extérieur de porte, le tableau de commande comportant des moyens d'appui sur la surface du panneau interne en regard de l'habitacle,
- les organes de fixation comportent des moyens de déverrouillage,
- la trappe d'accès est aussi un accès à un connecteur du tableau de commande,
- le tableau de commande est un tableau de commande d'un appareil de climatisation du véhicule.

D'autres caractéristiques et avantages de l'invention apparaîtront clairement à la lecture de la description suivante de modes de réalisation non limitatifs de celle-ci, en liaison avec les dessins annexés sur lesquels:
- la figure 1 est une vue d'ensemble d'un exemple de réalisation de l'agencement selon l'invention vu de l'intérieur de l'habitacle de véhicule,
- la figure 2 est vue de côté d'un tableau de commande de l'agencement selon l'invention,
- la figure 3 est un détail de la figure 2,
- la figure 4 est une vue en coupe d'un tableau de commande monté dans un panneau intérieur de l'agencement d'éléments d'habillage selon l'invention.

Dans la description qui va suivre, les composants identiques ou analogues sont désignés par les mêmes références numériques sur l'ensemble des figures.

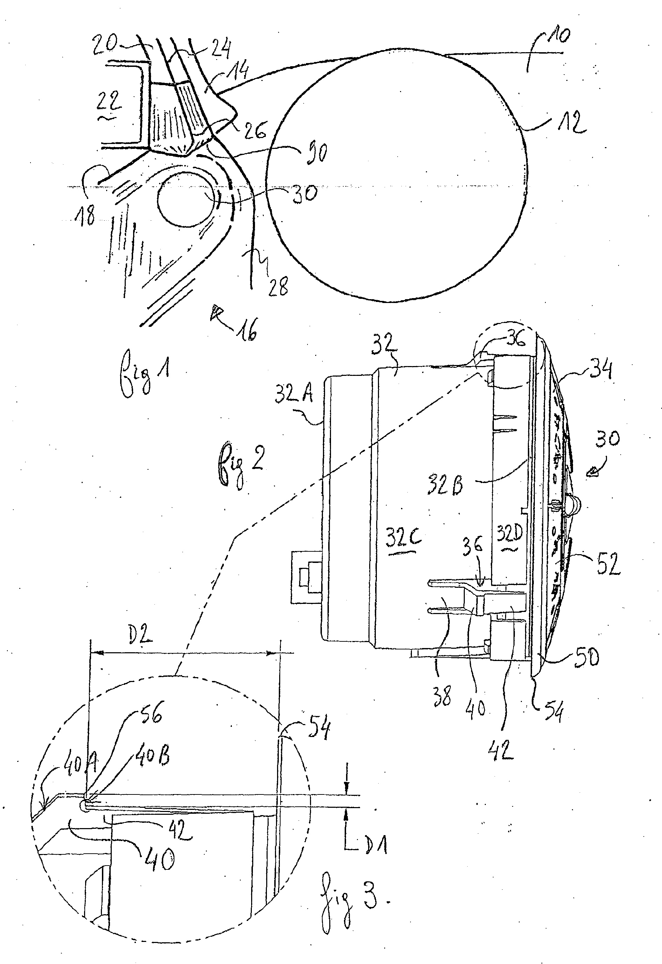

La figure 1 représente une vue d'ensemble d'un exemple de réalisation de l'agencement selon l'invention vue de l'intérieur de l'habitacle de véhicule. Sont représentés à la figure 1 la planche de bord 10 de l'habitacle, le volant 12, un montant de baie 14, et une porte 16 comportant un corps 18 et un montant 20. La porte 16 comporte un panneau extérieur et des armatures en tôle non représentés. Un rétroviseur extérieur 22 est attaché au montant 20. Dans l'exemple représenté, un élément d'habillage 24 recouvre le montant de porte 20 sur sa partie haute et un autre élément d'habillage 26, en l'espèce un cache rétroviseur, recouvre le montant de porte 20 sur sa partie basse. Un élément d'habillage 28, en l'espèce un panneau intérieur, recouvre un panneau extérieur (non représenté) de corps de porte 18. Un tableau de commande 30 est monté dans le panneau intérieur d'habillage 28 sensiblement verticalement.

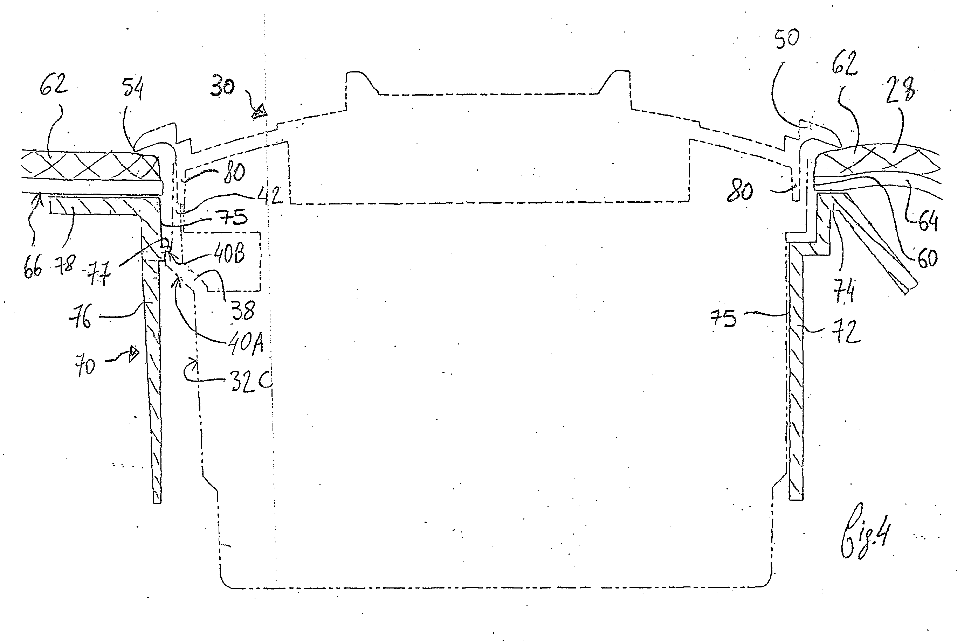

Comme illustré à la figure 2, le tableau de commande 30 comporte un boîtier 32 sensiblement cylindrique et une façade 34 en forme de soucoupe. La façade 34 est en saillie par rapport au contour périphérique du boîtier 32. Le boîtier 32 présente un fond 32A, une embouchure 32B et des surfaces périphériques 32C et 32D. A la périphérie, le boîtier 32 comporte trois pattes élastiques d'encliquetage 36 réparties régulièrement à 120° l'une par rapport aux autres. Chaque patte 36 comporte un pied flexible 38 dont la surface extérieure est située sensiblement dans le prolongement de la surface périphérique 32C, un corps 40 et une tête 42. Le corps 40 présente une surface périphérique incliné 40A du pied vers l'extérieur, dans le sens du fond vers l'embouchure 32B. Le corps 40 présente un épaulement 40B formant une surface sensiblement perpendiculaire à l'axe du boîtier 32, vers l'embouchure. La tête 42 se raccorde sur le corps 40 au niveau de l'épaulement 40B. La surface externe de la tête 42 est sensiblement parallèle aux surfaces périphériques 32C et 32D, l'épaulement 40B étant en saillie d'une distance D1 vers l'extérieur par rapport à la tête 42. L'épaulement 40B forme un cran d'encliquetage en saillie du boîtier 32, en particulier de la surface périphérique 32D.

La façade 34 présente une collerette périphérique 50 et une portion centrale 52, réservée par exemple à la commande d'un appareil de climatisation de l'habitacle, présentant des interrupteurs, par exemple pour commander le dégivrage du pare brise ou de la lunette arrière, et des manettes de commande, par exemple pour commander la vitesse du groupe moto ventilateur de l'appareil de climatisation. La collerette périphérique 50 présente une arête périphérique 54 située au niveau de l'embouchure 32B.

Une distance D2 sépare l'épaulement 40B de l'arête périphérique 54 qui est située nettement vers l'extérieur par rapport à une arête extérieure 56 de l'épaulement 40B.

Comme représenté à la figure 4, le tableau de commande est monté dans un orifice 60 du panneau d'habillage intérieur 28 de la porte 18, qui comporte une couche de tissu couplée à de la mousse 62 et une couche rigide 64. La couche de tissu 62 est en regard de l'habitacle du véhicule. La couche rigide 64 présente une face interne 66 en regard du panneau extérieur de la porte 16.

Une entretoise 70 est en appui entre la face interne 66 et l'épaulement 40B. L'entretoise 70 comporte une corps sensiblement cylindrique 72 et une collerette périphérique 74. Le corps 72 comporte trois pattes élastiques d'encliquetage 76 réparties régulièrement à 120° l'une par rapport aux autres. Chaque patte 76 est par exemple délimitée par une fente (non représentée) ménagée dans le corps 72. Chaque patte 76 comporte un épaulement intérieur 77, en saillie par rapport à la surface interne de la patte. L'épaulement 77 forme un cran d'encliquetage en saillie par rapport à une ouverture interne 75 de l'entretoise 70 prévue pour la réception du boîtier 32. Au niveau des pattes 76, la collerette 74 comporte une extension périphérique 78.

Le tableau de commande est représenté monté dans le panneau d'habillage 28. La collerette 74, en particulier au niveau des extensions 78, est en appui sur la face interne 66. Chaque épaulement 77 est en appui sur un épaulement 40B.

Les pattes 76 et 36 forment des organes de fixation indémontable en tirant le tableau de commande vers l'habitacle. Il n'y a donc pas de risque que le tableau de commande 30 puisse se démonter du fait de son inertie lorsque la porte 16 est claquée violemment lors de sa fermeture. De plus, la fixation étant ferme, il n'y a pas de risque de grincement parasites en cas de vibration de la porte 16.

Dans l'exemple représenté, la fixation est indémontable par la face externe du panneau intérieur 28 car le boîtier est muni de pattes d'encliquetage présentant une face d'appui prévue pour faire face, en saillie par rapport à la périphérie dudit boîtier, à la face interne du panneau intérieur et coopérant avec les organes de fixation en relation avec le panneau intérieur, en l'espèce les pattes 76, le tableau de commande comportant des moyens d'appui sur la surface du panneau interne en regard de l'habitacle, en l'espèce l'arrête 54 de la collerette 50

Pour parfaire l'assemblage en amenuisant les risques de grincements parasites, la collerette 50 présente une partie annulaire 80 en appui sur la surface interne de la tête 42 des pattes 42 pour les maintenir écartées en appui contre l'entretoise 70. La collerette 50 est solidaire du corps 32 par exemple par des moyens d'encliquetage.

Le montage des éléments d'habillage de porte est décrit ci-après.

Le mode de montage du tableau de commande 30 est le suivant. L'entretoise 70 est pressée vers la face interne 66 du panneau 28. Elle est par exemple collée sur ladite face interne 66. Le tableau de commande 30 muni de la collerette 50 est placé en regard de l'orifice 60, côté tissu 62 du panneau 28, jusqu'au contact de la face 40A de chaque patte 36 avec l'épaulement 77 qui correspond, les pattes 76 et 36 étant situées à un même niveau. Le tableau de commande 30 est alors pressé en direction du panneau 28, jusqu'à l'encliquetage mutuel des pattes 76 et 36 et l'entrée en contact de l'arête 54 avec le tissu 62 du panneau 28. Le montage est facilité par l'élasticité des pattes d'encliquetage 36 et 76 ainsi que par l'inclinaison de la surface 40A des pattes 36. L'entretoise 70 peut être maintenue côté face interne 66 pour éviter qu'elle se décolle du panneau 28.

Le panneau 28 est ensuite monté sur le panneau extérieur du corps 18 de porte 16. Le contour de la partie haute de l'élément d'habillage 28 est dessiné de telle manière qu'un espace libre est présent au pied du montant 20, entre une échancrure 90 du contour de l'élément d'habillage 28 et le panneau extérieur du corps 18 de porte 16. Le câblage du tableau de commande est effectué en connectant un connecteur (non représenté) dans le fond 32A. L'élément d'habillage 26 formant cache rétroviseur est ensuite monté sur la porte 16, en particulier sur son montant 20 par encliquetage traditionnel, le contour inférieur de l'élément d'habillage 26 s'adaptant avec le contour de l'échancrure 90.

Le mode opératoire du démontage du tableau de commande 30 est décrit ci-après.

L'élément d'habillage 26 formant cache rétroviseur est démonté de la porte pour ménager une trappe d'accès au niveau de l'échancrure 90. L'opérateur effectuant le démontage du tableau de commande peut accéder aux organes de fixation et au connecteur du tableau de commande par la trappe d'accès 90, côté face interne du panneau 28.

L'opérateur pousse alors sur le fond 32A du boîtier pour dégager les pattes d'encliquetage 36 et 76. Quand les pattes d'encliquetage 36 et 77 sont dégagées, l'opérateur peut, côté habitacle, extraire le tableau de commande 30 de l'orifice 60.

Pour faciliter le dégagement desdites pattes sans risquer de les endommager, avec trois doigts qu'il insère entre les pattes 76 et le corps 32, l'opérateur peut écarter lesdites pattes 76 et favoriser le dégagement de l'appui mutuel des épaulements 77 et 40B. Les organes de fixation du tableau de commande 30 comportent donc avantageusement des moyens de déverrouillage.

Le remontage du tableau de commande s'effectue comme vu précédemment, la trappe d'accès 90 étant suffisante pour permettre l'encliquetage mutuel en maintenant par exemple l'entretoise 70 pour éviter qu'elle se décolle du panneau 28. La trappe permet aussi de connecter le connecteur.

En variante non représentée, il n'y a pas d'entretoise rapportée, les pattes 76 étant intégrées au panneau 28, par exemple directement de moulage avec la couche rigide 64.

En variante non représentée, il n'y a pas de pattes 76 en relation avec le panneau intérieur 28. Dans ce cas, la face d'appui 40B des crans d'encliquetage de chaque patte d'encliquetage 36 du boîtier 32 est prévue pour s'appuyer directement sur la face interne 66 du panneau intérieur 28.

En variante non représentée des organes de fixation, seul le panneau intérieur comporte des pattes d'encliquetage saillantes par rapport au contour de l'orifice d'accueil du boîtier du tableau de commande. Les pattes d'encliquetage sont prévues pour coopérer avec une surface correspondante du boîtier située en regard du panneau extérieur de porte. Le tableau de commande comporte toujours des moyens d'appui sur la surface du panneau interne en regard de l'habitacle, en l'espèce la collerette en saillie du boîtier.

L'agencement selon l'invention à été décrit dans le cadre d'une application à un tableau de commande, mais l'agencement selon l'invention peut s'appliquer un écran tactile de commande.

## Revendications

1. Agencement d'éléments d'habillage intérieur de porte (16) de véhicule automobile comportant un panneau intérieur (28), dont une face interne (66) est prévue pour être en regard d'un panneau extérieur de porte et dont une face externe (62) est prévue pour être en regard de l'habitacle dudit véhicule, et un tableau de commande (30) d'un accessoire du véhicule monté sur ledit panneau intérieur (28) par l'intermédiaire d'organes de fixation (36, 76) situés côté face interne (66) dudit panneau intérieur (28), ledit panneau intérieur (28) comportant une trappe d'habillage (26), ledit tableau de commande (30) étant adapté pour être monté dans un orifice (60) du panneau intérieur (28), ledit tableau de commande (30) étant adapté pour être indémontable par action côté face externe dudit panneau intérieur (28), lesdits organes de fixation (36, 76) étant des organes de fixation indémontables en tirant le tableau de commande vers l'habitacle, ledit tableau de commande (30) étant adapté pour être démonté dudit panneau intérieur (28) par action côté face interne (66) dudit panneau intérieur (28) sur lesdits organes de fixation (36, 76) et la trappe d'habillage (26) étant montée au moins sur l'un du panneau extérieur ou du panneau intérieur (28) de façon amovible et ménageant un accès aux dits organes de fixation (36, 76), **caractérisé en ce que** la trappe d'habillage est un cache rétroviseur (26).

2. Agencement selon la revendication 1, **caractérisé en ce que** ledit tableau de commande (30) est placé sur ledit panneau intérieur (28) en position sensiblement verticale.

3. Agencement selon l'une quelconque des revendications précédentes, **caractérisé en ce que** le tableau de commande (30) comporte un boîtier (32) et **en ce que**, pour organe de fixation, ledit boîtier (32) est muni de pattes d'encliquetage (36) présentant une face d'appui (40B) prévue pour faire face, en saillie par rapport à la périphérie dudit boîtier (32C, 32D), à la face interne (66) du panneau intérieur (28) et coopérer avec des organes de fixation (76) en relation avec le panneau intérieur (66), le tableau de commande (30) comportant des moyens d'appui (54) sur la surface du panneau interne (28) en regard de l'habitacle.

4. Agencement selon la revendication précédente, **caractérisé en ce que** les organes de fixation (76) en relation avec le panneau (28) sont prévus sur une entretoise (70) prévue pour être placée en périphérie dudit boîtier (32) entre la face interne (66) du panneau intérieur (28) et la face d'appui (40B) des pattes d'encliquetage (36) du boîtier (32).

5. Agencement selon l'une quelconque des revendications 1 à 2, **caractérisé en ce que** pour organe de fixation, le panneau intérieur (66) comporte des pattes d'encliquetage saillantes par rapport au contour d'un orifice (60) d'accueil d'un boîtier (32) du tableau de commande (30) et prévues pour coopérer avec une surface correspondante du boîtier (32) située en regard du panneau extérieur de porte, le tableau de commande (30) comportant des moyens d'appui (54) sur la surface du panneau interne (28) en regard de l'habitacle.

6. Agencement selon la revendication 3, **caractérisé en ce que** la face d'appui (40B) de chaque patte d'encliquetage (36) du boîtier (32) est prévue pour s'appuyer directement sur la face interne (66) du panneau intérieur (28).

7. Agencement selon la revendication 4, **caractérisé en ce que** l'entretoise (70) comporte des pattes d'encliquetage (76, 77) prévues pour coopérer avec les pattes d'encliquetage (36) du boîtier (32).

8. Agencement selon l'une quelconque des revendications précédentes, **caractérisé en ce que** les organes de fixation (36, 76) comportent des moyens de déverrouillage.

9. Agencement selon l'une quelconque des revendications précédentes, **caractérisé en ce que** la trappe d'accès (26) est un accès à un connecteur du tableau de commande (30).

10. Agencement selon l'une quelconque des revendications précédentes, **caractérisé en ce que** le tableau de commande (30) est un tableau de commande d'un appareil de climatisation du véhicule.

## Claims

1. An arrangement of internal covering members of an automobile vehicle door (16) comprising an internal panel (28), an inner surface (66) of which is disposed so as to face an external door panel, and an outer surface (62) of which is disposed so as to face the passenger space of the vehicle, and a control panel (30) for a vehicle accessory mounted on the internal panel (28) by means of fastening members (36, 76) disposed on the inner surface (66) side of the internal panel (28), the internal panel (28) comprising a covering flap (26), the control panel (30) being adapted to be mounted in an orifice (60) of the internal panel (28), the control panel (30) being such that it cannot be dismantled by action on the outer surface side of the internal panel (28), the fastening members (36, 76) being fastening members that cannot be dismantled by pulling the control panel towards the passenger space, the control panel (30) being adapted to be dismantled from the internal panel (28) by action on the inner surface side (66) of the internal panel (28) on the fastening members (36, 76) and the covering flap (26) being mounted at least on the external panel or the internal panel (28) in a detachable manner and providing access to the fastening members (36, 76), **characterised in that** the covering flap is a rear-view mirror cover (26).

2. An arrangement as claimed in claim 1, **characterised in that** the control panel (30) is disposed on the internal panel (28) in a substantially vertical position.

3. An arrangement as claimed in any one of the preceding claims, **characterised in that** the control panel (30) comprises a housing (32) and **in that**, as a fastening member, the housing (32) is provided with snap-locking lugs (36) having a bearing surface (40B) adapted to face, projecting with respect to the periphery of the housing (32C, 32D), the inner surface (66) of the internal panel (28) and to cooperate with fastening members (76) in relation with the inner panel (66), the control panel (30) comprising bearing means (54) on the surface of the internal panel (28) facing the passenger space.

4. An arrangement as claimed in the preceding claim, **characterised in that** the fastening members (76) in relation with the panel (28) are provided on a strut (70) adapted to be placed on the periphery of the housing (32) between the inner surface (66) of the internal panel (28) and the bearing surface (40B) of the snap-locking lugs (36) of the housing (32).

5. An arrangement as claimed in any one of claims 1 to 2, **characterised in that**, as a fastening member, the inner panel (66) comprises snap-locking lugs projecting with respect to the contour of a reception orifice (60) of a housing (32) of the control panel (30) and adapted to cooperate with a corresponding surface of the housing (32) disposed to face the external door panel, the control panel (30) comprising bearing means (54) on the surface of the internal panel (28) facing the passenger space.

6. An arrangement as claimed in claim 3, **characterised in that** the bearing surface (40B) of each snap-locking lug (36) of the housing (32) is adapted to bear directly on the inner surface (66) of the internal panel (28).

7. An arrangement as claimed in claim 4, **characterised in that** the strut (70) comprises snap-locking lugs (76, 77) adapted to cooperate with the snap-locking lugs (36) of the housing (32).

8. An arrangement as claimed in any one of the preceding claims, **characterised in that** the fastening members (36, 76) comprise unlocking means.

9. An arrangement as claimed in any one of the preceding claims, **characterised in that** the access flap (26) enables access to a connector of the control panel (30).

10. An arrangement as claimed in any one of the preceding claims, **characterised in that** the control panel (30) is a control panel of an air conditioning unit of the vehicle.

## Patentansprüche

1. Anordnung von inneren Verkleidungselementen einer Tür (16) eines Kraftfahrzeugs, welche eine innere Platte (28) aufweist, bei der eine innere Fläche (66) vorgesehen ist, gegenüberliegend einer äußeren Platte der Tür zu sein, und bei der eine äußere Fläche (62) vorgesehen ist, gegenüber der Fahrgastzelle des Fahrzeuges zu sein, und eine Steuertafel (30) eines Zubehörteils des Fahrzeuges, die an der inneren Platte (28) über Befestigungselemente (36, 76) montiert ist, welche an der inneren Fläche (66) der inneren Platte (28) angeordnet sind, wobei die innere Platte (28) eine Verkleidungsklappe (26) aufweist, wobei die Steuertafel (30) angepasst ist, in einer Öffnung (60) der inneren Platte (28) montiert zu werden, wobei die Steuertafel (30) angepasst ist, nicht demontierbar zu sein durch eine Einwirkung seitens der äußeren Fläche der inneren Platte (28), wobei die Befestigungselemente (36, 76) Befestigungselemente sind, die nicht demontierbar sind durch ein Ziehen der Steuertafel in Richtung der Fahrgastzelle, wobei die Steuertafel (30) angepasst ist, von der inneren Platte (28) durch eine Einwirkung seitens der inneren Fläche (66) der inneren Platte (28) auf die Befestigungselemente (36, 76) demontiert zu werden, und wobei die Verkleidungsklappe (26) mindestens an der äußeren Platte oder der inneren Platte (28) in abnehmbarer Art und Weise und unter einem Aussparen eines Zugangs zu den Befestigungselementen (36, 76) montiert ist, **dadurch gekennzeichnet, dass** die Verkleidungsklappe eine Abdeckung eines Rückspiegels (26) ist.

2. Anordnung nach Anspruch 1, **dadurch gekennzeichnet, dass** die Steuertafel (30) an die innere Platte (28) in einer im Wesentlichen vertikalen Stellung gesetzt ist.

3. Anordnung nach einem der vorangegangenen Ansprüche, **dadurch gekennzeichnet, dass** die Steuertafel (30) ein Gehäuse (32) aufweist, und **dadurch**, dass als Befestigungselement das Gehäuse (32) mit Einrastklauen (36) ausgestattet ist, welche eine Anlagefläche (40B) aufweisen, die vorgesehen ist, vorragend im Verhältnis zur Peripherie des Gehäuses (32C, 32D) an der inneren Fläche (66) der inneren Platte (28) gegenüberzuliegen und mit Befestigungselementen (76) im Verhältnis zur inneren Platte (66) zusammenzuwirken, wobei die Steuertafel (30) Abstützmittel (54) an der Oberfläche der inneren Platte (28) gegenüberliegend der Fahrgastzelle aufweist.

4. Anordnung nach dem vorangegangenen Anspruch, **dadurch gekennzeichnet, dass** die Befestigungselemente (76) in Verbindung mit der Platte (28) an einer Querstrebe (70) vorgesehen sind, die vorgesehen ist, um an der Peripherie des Gehäuses (32) zwischen der inneren Fläche (66) der inneren Platte (28) und der Abstützfläche (40B) der Einrastklauen (36) des Gehäuses (32) angeordnet zu sein.

5. Anordnung nach irgendeinem der Ansprüche 1 bis 2, **dadurch gekennzeichnet, dass** als Befestigungselement die innere Platte (66) Einrastklauen aufweist, welche im Verhältnis zum Umfang einer Aufnahmeöffnung (60) eines Gehäuses (32) der Steuertafel (30) vorragend sind und zum Zusammenwirken mit einer entsprechenden Oberfläche des Gehäuses (32) vorgesehen sind, welche gegenüberliegend der äußeren Platte der Tür angeordnet ist, wobei die Steuertafel (30) Abstützmittel (54) an der Oberfläche der inneren Platte (28) gegenüberliegend der Fahrgastzelle aufweist.

6. Anordnung nach Anspruch 3, **dadurch gekennzeichnet, dass** die Abstützfläche (40B) jeder Einrastklaue (36) des Gehäuses (32) vorgesehen ist, um sich direkt auf der inneren Fläche (66) der inneren Platte (28) abzustützen.

7. Anordnung nach Anspruch 4, **dadurch gekennzeichnet, dass** die Querstrebe (70) Einrastklauen (76, 77) aufweist, die vorgesehen sind, um mit den Einrastklauen (36) des Gehäuses (32) zusammenzuwirken.

8. Anordnung nach einem der vorangegangenen Ansprüche, **dadurch gekennzeichnet, dass** die Befestigungselemente (36, 76) Entriegelungsmittel aufweisen.

9. Anordnung nach einem der vorangegangenen Ansprüche, **dadurch gekennzeichnet, dass** die Zugangsklappe (26) ein Zugang zu einem Verbinder der Steuertafel (30) ist.

10. Anordnung nach irgendeinem der vorangegangenen Ansprüche, **dadurch gekennzeichnet, dass** die Steuertafel (30) eine Steuertafel eines Klimatisierungsgerätes des Fahrzeuges ist.
